# EUROPÄISCHE PATENTSCHRIFT

(11) **EP 0 517 653 B1**
(45) Veröffentlichungstag und Bekanntmachung des Hinweises auf die Patenterteilung: **05.03.1997**
(21) Anmeldenummer: 92810376.1
(22) Anmeldetag: 20.05.1992
(51) Int. Cl.: G01B 5/00

(54) **Tastmesskopf**
Feeler measuring head
Tête de mesure palpeur

(30) Priorität: 07.06.1991 CH 1706/91
(43) Veröffentlichungstag der Anmeldung: 09.12.1992
(73) Patentinhaber: Saphirwerk Industrieprodukte AG, 2555 Brügg (CH)
(72) Erfinder: Dubois-Dunilac, Daniel, CH-1485 Nuvilly (CH); Salvisberg, Werner, CH-3250 Lyss (CH); Fridez, Jean-Daniel, Dr., CH-4717 Mümliswil (CH)
(74) Vertreter: Peege, Klaus

(56) Entgegenhaltungen:
- EP-A- 0 237 470
- EP-A- 0 332 575
- EP-A- 0 372 302
- EP-A- 0 416 391
- DE-A- 3 623 217
- DE-C- 3 739 040
- US-A- 3 250 012
- PATENT ABSTRACTS OF JAPAN vol. 6, no. 82 (P-116)(960) 20. Mai 1982 & JP-A-57 019 604
- PATENT ABSTRACTS OF JAPAN vol. 11, no. 335 (P-632)(2782) 4. November 1987 & JP-A-62 119 401

## Beschreibung

Die Erfindung betrifft ein Tastmessgerät.

Tastmessgeräte werden in der Industrie für die verschiedensten Aufgaben eingesetzt. Derartige Tastmessgeräte sind z.B. aus der DE-A1-37 01 730, der DE-A1-36 03 269, der US-PS-3,250,012 oder der EP-A2-332 575 bekannt. Vor allem werden solche Tastmessgeräte bei Mehrkoordinaten-Messmaschinen und Werkzeugmaschinen verwendet, bei denen das Werkstück relativ zum Taster in mehreren Achsen verschiebbar ist. Dabei wird der Verschiebungsweg gemessen und beim Antasten des Werkstückes werden durch einen Messwertumwandler Messimpulse abgegeben. Dabei können die verschiedensten Messwert-Umwandler einsetzen, mit denen z.B. nur die Anwesenheit eines Werkstücks, der Ort eines Werkstücks oder aber auch ein zurückgelegter Weg gemessen wird.

Ersichtlicherweise hängt die Messgenauigkeit und insgesamt die Funktion des Tastmessgeräts nicht nur vom Messwert-Umwandler sondern vor allem auch von der Lagerung des Taststifts und der Uebertragung der Auslenkung des Taststifts auf den Messwertumwandler ab. An diese Lagerung und die Uebertragung der Auslenk-Strecken werden höchste Anforderungen im Hinblick auf Präzision, Laufeigenschaften, Korrosionswiderstand und dimensionelle Konstanz gestellt. Insbesondere dürfen durch Wärmeausdehnung, Spiel von Bauteilen oder Reibung weder absolute Messfehler noch Umkehrfehler auftreten. Auch muss die Auslenkung des Taststifts unmittelbar und ohne Verzögerung auf den Messwert-Umwandler übertragen werden und es soll gewährleistet sein, dass das Messsystem am Ende der Messung ebenso schnell in die Nullage zurückkehrt.

Bei bekannen Tastmessgeräten werden meist zur Lagerung die üblichen Werkstoffpaarungen vorgesehen, d.h. also meist die Kombination "weicher" und "harter" Materialien. Zur Reduzierung von Korrosionsgefahr und Reibungsverlusten werden Schmiermittel eingesetzt. Daraus ergibt sich sowohl unterschiedliche Wärmeausdehnung der verschiedenen Bauteile, was zu Temperaturfehlern führt, als auch ungleichmässiges Reibungsverhalten durch die Viskosität des Schmiermittels, was z.B. zu Umkehrfehlern oder Verzögerungen bei der Auslenkung führen kann.

Durch die US-PS-3,250,012 ist ein Taster bekannt geworden, bei dem das Uebertragungselement mit einer Kugelkalotte in einem Gehäuse gelagert ist und durch Federkraft gegen die Kugelkalotte bzw. ein die Kugelkalotte aufnehmendes Lager gepresst wird. Das Uebertragungselement ist dabei als Kolben ausgebildet, der mit zwei Ringen linienförmig an der Innenwand eines zylindrischen Gehäuseteils anliegt. Dabei handelt es sich offensichtlich um eine übliche Bauform mit Metallteilen, die entsprechend manuell bearbeitet sind und bei denen schon deshalb die vorstehend beschriebenen Probleme auftreten können. Ausserdem wird durch die linienförmige Berührung zwischen zylindrischer Gehäusewand und Uebertragungs-Kolben sowohl die Flächenpressung und die Verschleissgefahr als auch das "Fressen" des Kolbens bei Schmiermittelproblemen verstärkt. Die Auslenkung des Taststifts und des Kolbens ist darüberhinaus unkontrolliert und ungeführt, was zum Verdrehen des Taststifts bei der Auslenkung und damit zu falschen Messergebnissen führen kann.

Der Taster gemäss EP-A2-332 575 ist zwar durch Anordnung einer Verdrehsicherung des Kugelelements verbessert. Auch diese Anordnung lässt sich aber hinsichtlich ihrer Laufeigenschaften und der Kräfteverteilung in der Verdrehsicherung und im Uebertragungselement noch weiter verbessern.

Aus der EP-A- 0 237 470 ist ein Messtaster bekannt, der u.a. ein Mantelrohr, eine im Mantelrohr angeordnete Führungshülse und einen in der Führungshülse axial verschiebbaren Massstabträger umfasst. Bei diesem Messtaster sind Führungshülse und Massstabträger aus überharten Werkstoffen hergestellt.

Der Erfindung liegt die Aufgabe zugrunde, die Nachteile des Bekannten zu vermeiden, insbesondere also ein Tastmessgerät zu schaffen, das bei einfachem Aufbau zuverlässig und verschleissfrei arbeitet und vor allem auch im rauhen Betrieb und bei wechselnden Umgebungseinflüssen weitgehend toleranzfrei arbeitet.

Diese Aufgabe wird in erster Linie durch den Gegenstand des Patentanspruches 1 gelöst.

Durch die Verwendung eines Keramikwerkstoffs wird erfindungsgemäss in erster Linie gewährleistet, dass sowohl für die Lauffläche des Gehäuseteils als auch die Lauffläche des Uebertragungselements der gleiche Werkstoff verwendet werden kann. Daraus resultiert die Möglichkeit, Werkstoffe mit gleicher Wärmeausdehnung auszuwählen, wodurch Messfehler vermieden werden, weil jeder Wärmeausdehnung des Gehäuseteils, die an sich zu einer Vergrösserung des Abstands zwischen Uebertragungselement und Messwert-Umwandler führen könnte, eine gleiche oder vergleichbare Längenänderung des Uebertragungselements gegenüber steht, die den Abstand zum Messwertumwandler verkürzt, d.h. also Temperaturfehler kompensiert. Gleichzeitig gewährleistet die Verwendung von bestimmten hochfesten Keramikwerkstoffen hervorragende Wärmeleitung durch die Wand des zylindrischen Gehäuseteils auf das innenliegende Uebertragungselement, so dass Temperaturschwankungen beide Teile gleichmässig beeinflussen.

Vorteilhaft ist das Uebertragungselement ein zylindrischer Körper, der also flächig und nicht linienförmig an der Innenwand des Gehäuseteils anliegt. Dadurch wird die Wärmeleitung mit dem Effekt der vorstehend beschriebenen Kompensation von Temperaturfedern optimiert. Gleichzeitig wird der Verschleiss durch Reduktion der Flächenpressung zwischen zylindrischem Gehäuseteil und Uebertragungselement reduziert, wobei durch die erfindungsgemässe Rauheitsklasse von N 6 bis N 3, vorzugsweise von etwa N 4 der Reibungskoeffizient auf 0,1 bis 0,3 ohne Schmierung (in Luft) für die relativen Bewegungsgeschwindigkeiten von < 0,5 m/s gesenkt werden kann.

Als Keramik eignet sich besonders Aluminiumoxidkeramik (Al₂O₃) von höchster Festigkeit (Biegefestigkeit > 250 MPa). Der hohe Elastizitätsmodul dieses Keramikwerkstoffs garantiert dabei zusätzlich hohe Steifigkeit.

Unter Rauhigkeitsklasse werden dabei die Rauheitsklassen gemäss den am Ende der Beschreibung angeführten Werknormen verstanden. Danach beträgt der Mittenrauwert Rₐ bei einer Rauheitsklasse von N 6 0,8 µm oder 32 µin und 0,1 µm oder 4 µin bei einer Rauheitsklasse von N 3. Der Mittenrauwert Rₐ wird dabei nach DIN 4768 definiert und das Rauheitsprofil R stellt alle Profilabweichungen von der mittleren Linie dar. Die Begriffe entsprechen dabei der ISO Norm 1302-1974 und den VSM Werknormen 10231.

Vor allem Verschleissfestigkeit, Wartungsfreiheit und Temperaturstabilität des erfindungsgemässen Tastgeräts wird weiter verbessert, wenn auch das Kugelelement und die Lagerstelle aus einem hochfesten Keramikwerkstoff bestehen.

Durch die Ausbildung eines zylindrischen Uebertragungselements wird zudem ermöglicht, den Messwertumwandler wenigstens teilweise im Uebertragungselement anzuordnen, wodurch Stabilität und Kompaktheit der Anordnung verbessert werden.

Besonders vorteilhaft ist es dabei, wenn der Messwertumwandler auf einem Träger angeordnet ist, der ebenfalls aus hochfesten Keramikwerkstoff gefertigt ist. Auf diese Weise lässt sich die Temperaturstabilität der Anordnung weiter verbessern. Wenn das zylindrische Gehäuseteil und/oder das Uebertragungselement und/oder der Träger für den Messwertumwandler aus verschiedenen Keramikwerkstoffen bestehen, lässt sich die Erfindung vorteilhaft realisieren, wenn die Wärmeausdehnungskoeffizienten von wenigstens zwei der Werkstoffe nicht mehr als 10 % voneinander abweichen.

Besonders vorteilhaft ist es aber, wenn sowohl das Gehäuseteil als auch das Uebertragungselement je einstückig aus Keramikwerkstoff gefertigt sind. Optimale Dimensionsstabilität und Vermeidung von Umkehrfehlern bei gleichzeitig guter Wärmeübertragung vom Gehäuseteil auf das Uebertragungselement wird erfindungsgemäss vor allem dann noch verbessert, wenn das Spiel zwischen der Lauffläche des Gehäuseteils und der Lauffläche des Uebertragungselements < 2 µm ist.

Dabei wird die Verschleissfestigkeit und niedrige Reibung zwischen Uebertragungselement und Lauffläche des äusseren Gehäuseteils erfindungsgemäss weiter verbessert, wenn die Rundheit der beiden Laufflächen < 0,5 µm und die Zylindrizität < 1 µm ist, und wenn eine Durchmesser-Präzision von ± 0,5 µm eingehalten wird.

Auf optimal einfache Weise werden Fehler durch Verdrehung des ausgelenkten Kugelelements und ungleichmässige Kraftübertragung auf das Uebertragungselement vermieden, indem am Kugelelement und gegebenenfalls am Uebertragungselement eine Verdrehsicherung vorgesehen ist.

Wesentlich ist auch, dass bei dem Tastmessgerät am Kugelelement als Verdrehsicherung ein Stift vorgesehen ist, der eine Kugel trägt, die in einer Längsnut verläuft, die in Wirkverbindung mit dem äusseren Gehäuseteil und/oder der Lagerstelle des Kugelelements steht. Die Nut ist dabei eine Präzisionsnut, in welcher eine Hartmetall- oder Keramikkugel mit höchster Präzision läuft. Dadurch wird im Gegensatz zum bekannten Stand der Technik auf optimal einfache Weise gewährleistet, dass keinerlei Verkantung der beiden Führungselemente entstehen kann, da die Kugel in der Nut höchstens zwei Kontaktpunkte hat. Vorteilhaft ist es dabei, wenn das Spiel zwischen Kugel und Nut < 0,5 µm ist und wenn Kugel und Nut aus Werkstoffen mit den gleichen Wärmeausdehnungskoeffizienten (oder vergleichbaren Wärmeausdehnungskoeffizienten) gefertigt werden. Dadurch wird höchste Führungsgenauigkeit bei Vermeidung von Klemmrisiken durch Wärmeausdehnung gewährleistet. Dies lässt sich vor allem erreichen, wenn die Kugel ein Präzisions-Keramik-Bauteil mit einer Rundheit von ≤ 0,13 µm, einer Durchmesserpräzision von ± 0,25 µm und einer Rauheitsklasse von etwa ≤ N 0 oder einem Rauheitswert Rₐ von ≤ 0,0125 µm bzw. 0,5 µin ist.

Insgesamt schafft die Erfindung auf optimal einfache Weise mit einer Mindestzahl von Bauteilen ein genaues, von Störgrössen weitgehend unabhängiges, verschleissicheres und störungsunanfälliges Tastmessgerät.

Die Erfindung ist im folgenden in Ausführungsbeispielen anhand der Zeichnungen näher erläutert. Es zeigen:
- Figur 1: Die schematische Darstellung eines erfindungsgemässen Tastmessgeräts im Schnitt;
- Figur 2: die schematische Darstellung eines Schnitts längs der Linie A-A in Figur 1 im verkleinerten Massstab und ohne Taststift;
- Figur 3: die schematische Darstellung des Tastmessgeräts gemäss Figur 2 mit eingebautem Messwertumwandler;
- Figur 4: die schematische Schnittdarstellung eines Messgeräts gemäss Figur 1 mit äusserem Gehäuseteil.

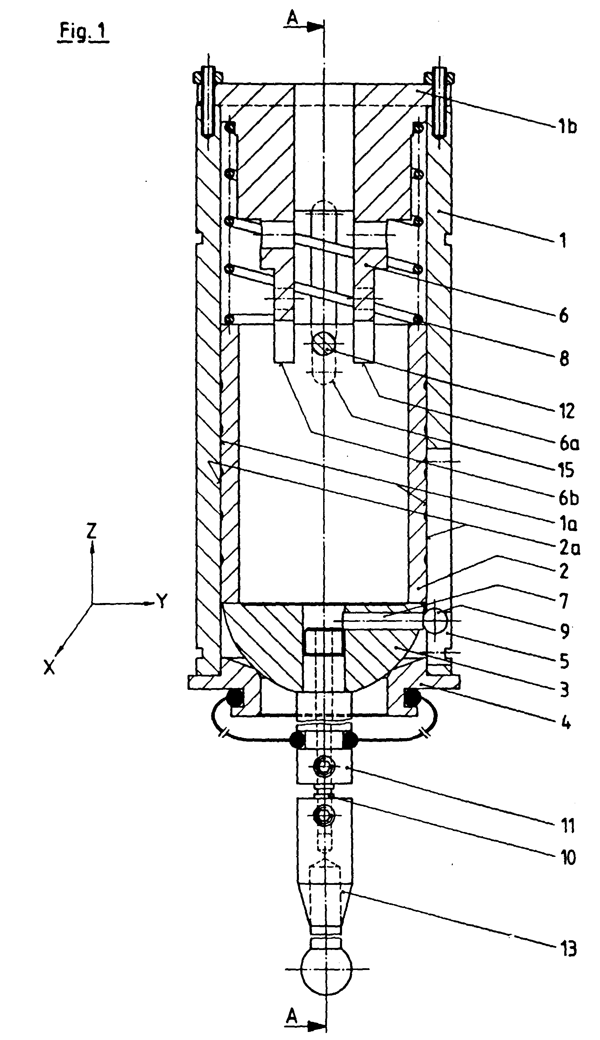

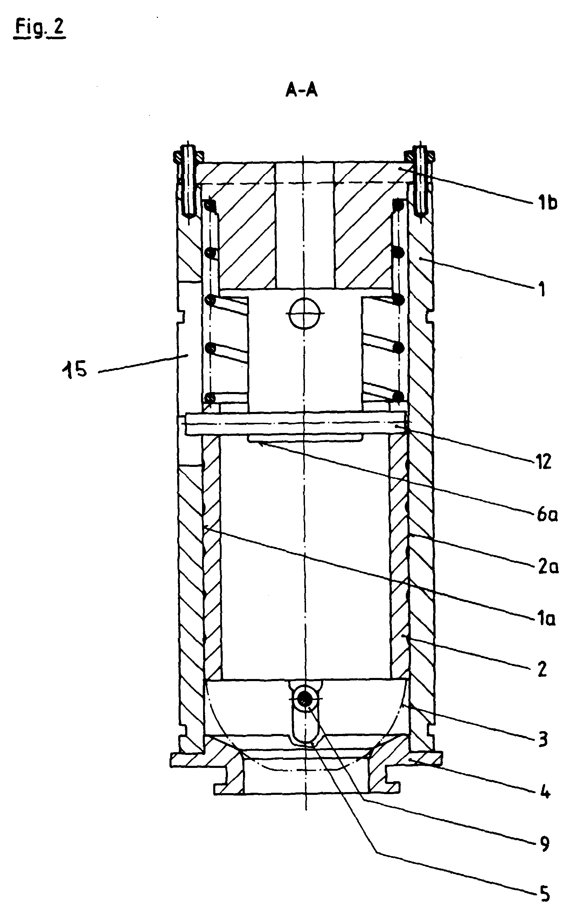

Die in Figur 1 bis 4 dargestellten Tastmessgeräte weisen ein zylindrisches äusseres Gehäuseteil 1 auf, das aus Aluminiumoxid-Keramik gefertigt ist. Im Gehäuseteil 1 ist ein zylindrisches Uebertragungselement 2 längs verschiebbar gelagert. Das Uebertragungselement 2 ist ebenfalls aus Keramikwerkstoff gefertigt (Al₂O₃-Keramik mit einer Biegefestigkeit > 250 MPa und einem Wäremausdehnungskoeffizienten von < 10 x 10 ^{-6°} K⁻¹ analog dem Material des Gehäuseteils 1).

Die Laufflächen 1a, 2a des Gehäuseteils 1 bzw. des Uebertragungselements 2 sind geschliffen und weisen eine Rauheitsklasse N 4, d.h. einen Mittenrauwert Rₐ (nach DIN 7768) von etwa 0,2 µm bzw. 8 µin auf. Das Spiel zwischen den Laufflächen 1a und 2a beträgt etwa 1 bis 1,5 µm. Die beiden Laufflächen liegen also fast spielfrei aneinander an, können jedoch aufgrund der hohen Oberflächengüte ohne Schmiermittel und praktisch verschleissfrei aufeinander gleiten. Jede Erwärmung des Gehäuseteils 1 führt aufgrund des Flächenkontakts der Laufflächen 1a, 2a zu einer praktisch gleichzeitigen Erwärmung des Uebertragungselements 2.

Das Uebertragungselement 2 wird durch eine Feder 8 gegen ein Kugelelement 3 gepresst, welches in einer Lagerstelle 4 in der X- und Y-Achse verdrehbar gelagert ist. Das Kugelelement 3 und die Lagerstelle 4 ist aus dem gleichen Keramikmaterial gefertigt, wie das Gehäuseteil 1 und das Uebertragungselement 2 und auch die Oberflächenbearbeitung und die Rauheitsklasse ist vergleichbar. Am Kugelelement 3 ist mittels eines Taster-Halters 11 und eines Sollbruchstifts 10 ein Taststift 13 befestigt. Sobald der Taststift 13 mit einer seitlichen Kraft beaufschlagt wird, verdreht sich das Kugelelement 3 in bekannter Weise in der Lagerstelle 4, wodurch das Uebertragungselement 2 gegen die Kraft der Feder angehoben wird. Sofern der Taststift 13 durch eine senkrecht von unten wirkende axiale Kraft beaufschlagt wird, lässt sich das Kugelelement 3 aus der Lagerstelle 4 anheben, wodurch ebenfalls das Uebertragungselement 2 gegen die Kraft der Feder 8 axial nach oben verlagert wird.

Um zu verhindern, dass sich das Kugelelement 3 bei der Auslenkung um die eigene Achse dreht, ist eine Verdrehsicherung in Form eines Stifts 7 vorgesehen, der eine Kugel 9 trägt, die in einer Längsnut 5 in der Wand des Gehäuseteils 1 geführt wird. Die Kugel 9 ist eine Keramikkugel mit einer Rauheitsklasse von < N 0, d.h. < etwa 0,0125 µm bzw. 0,5 µin Mittenrauwert Rₐ. Die Rundheit der Kugel 9 ist < 0,13 µm und die Druchmesserpräzision beträgt ± 0,25 µm. Das Spiel zwischen der Kugel 9 und der Längsnut 5 ist < 0,5 µm, so dass eine absolut präzise seitliche Führung der Kugel 9 an höchstens zwei punktförmigen Auflagerflächen gewährleistet ist. Quer im Uebertragungselement 2 ist ein Stift 12 befestigt, dessen Länge grösser ist, als der Aussendurchmesser des Uebertragungselements 2. Das überstehende Ende des Stifts 12 wird in einer Nut 15 geführt, die in der Lauffläche 1a des Gehäuseteils 1 vorgesehen ist. Die Längsbewegung des Uebertragungselements 2 wird also durch den Stift 12 geführt, der in der Nut 15 gleitet. Damit ist auch das Uebertragungselement 2 gegen jede axiale Verdrehung gesichert. Die Rauheitsklasse des Stifts 12 und der Nut 15 ist < N 6, d.h. also < 0,8 µm bzw. 32 µin Rₐ wodurch reibungsfreies und spielarmes Gleiten gewährleistet wird.

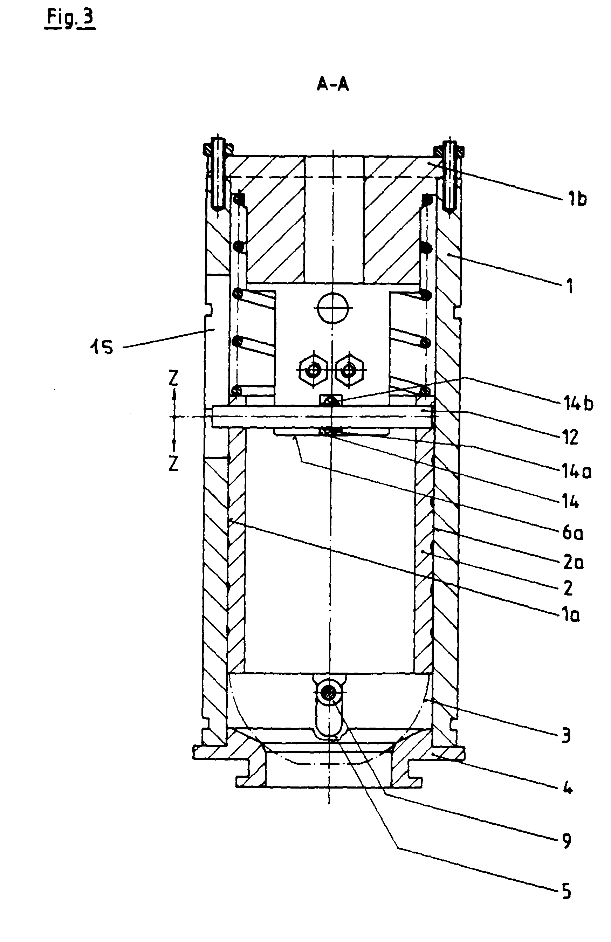

Das Gehäuseteil 1 ist an seinem oberen Ende mit einer Abdeckscheibe 1b aus Keramikmaterial verschlossen. An der Abdeckscheibe 1b ist ein Träger 6 vorgesehen, der mit zwei Schenkeln 6a, 6b den Stift 12 seitlich umgibt und in den Innenraum des Uebertragungselements 2 eintaucht. Der Träger 6 ist demnach stationär mit dem Gehäuseteil 1 verbunden, so dass jede axiale Lagerveränderung des Uebertragungselement in Folge einer Auslenkung des Taststifts 13 zu einer Veränderung der Relativlage zwischen Stift 12 und Träger 6 führt. Dementsprechend eignet sich der Träger 6 besonders zum Anbringen eines Messwertumwandlers 14, wie er in Figur 3 schematisch durch zwei Lichtschranken-Fühler 14a, 14b angedeutet ist. Jede Lageveränderung des Stifts 12 in Richtung der Z-Achse lässt sich auf diese Weise durch eine der Lichtschrankenanordnungen 14a oder 14b erfassen, wobei die Weg-Auslenkung des Taststifts 13 bzw. die axiale Auslenkung des Uebertragungselements 2 in ein elektrisches Signal umgewandelt wird, dass auf bekannte Weise verarbeitet werden kann.

Selbstverständlich lassen sich anstelle der Lichtschrankenanordnungen 14a, 14b auch andere bekannte Messwertumwandler vorsehen. Insbesondere können dabei Längenmessgeräte, wie inkrementale Längenmess-Systeme gemäss EP-A-237 470 oder induktive oder kapazitive Mess-Systeme eingesetzt werden, ohne dass dabei der Rahmen der Erfindung verlassen würde. Dabei ist in bekannter Weise die Relativbewegung von Stift 12 und Träger 6 zur Erfassung und Umwandlung des Messwerts auszunutzen.

Um Temperaturfehler weitestgehend auszuschliessen, ist die Absteckscheibe 1b, der Träger 6, das Gehäuseteil 1 und die Lagerstelle 4 im Bereich ihrer Berührungsfläche ebenfalls plan geschliffen und sie weisen wenigstens im Berührungsbereich einen Mittenrauwert Rₐ von ≤ 0,8 µm bzw. 32 µin auf. Zur Verbindung der Bauteile werden diese zunächst an den Berührungsflächen aufeinandergepresst, so dass eine flächige Materialberührung entsteht. Sodann wird ein dünnflüssiger Epoxykleber seitlich auf den Spalt aufgebracht, in den er aufgrund der Kapillarwirkung eingesogen wird. Durch diese Verbindung der Bauteile wird erreicht, dass durch grössere Wärmeausdehnungswerte des Klebers keine Längenveränderung der Bauteile auftreten kann, da sich die Keramikbauteile an den höchsten Oberflächenpunkten direkt berühren.

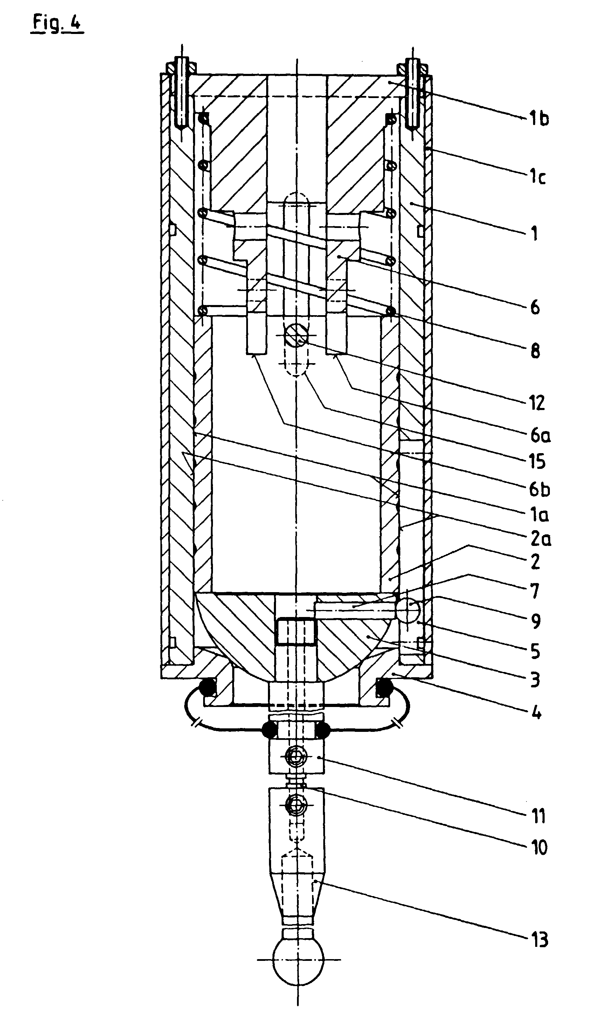

Bei den Ausführungsbeispielen gemäss Figur 1 bis 3 ist das Gehäuseteil 1 sowohl als Gehäusemantel des Testmessgeräts als auch als Aufnahme-Zylinder für das Uebertragungselement 2 vorgesehen. Beim Ausführungsbeispiel gemäss Figur 4 ist das Gehäuseteil 1 noch von einem zusätzlichen Gehäusemantel 1c umgeben. Der Gehäusemantel 1c ist über nicht dargestellte Spannringe mit dem Gehäuseteil 1 so verbunden, dass zwischen den beiden Bauteilen eine Relativbewegung möglich ist, die bei Wärmeausdehnung aufgrund der unterschiedlichen Wärmeausdehnungskoeffizienten auftritt. In gleicher Weise wäre es z.B. selbstverständlich auch möglich im Uebertragungselement 2 einen zusätzlichen Innenmantel z.B. zur Verstärkung des Bauteils vorzusehen, ohne dass dadurch der Rahmen der Erfindung verlassen würde.

Beim Ausführungsbeispiel gemäss Figur 4 ist ausserdem die Lagerstelle 4 im Gehäuseteil 1 seitlich hochgezogen, so dass die Längsnut 5a in der Lagerstelle 4 angeordnet werden kann und nicht in der Wand des Gehäuseteils 1, wie in Figur 1 bis 3 dargestellt. Da die Lagerstelle 4 fest mit dem Gehäuseteil 1 verbunden ist, wird auf diese Weise die gleiche Wirkung der Verdrehsicherung erreicht wie im Zusammenhang mit Figur 1 bis 3 beschrieben.

## Patentansprüche

1. Ein Tastmessgerät, umfassend
(a) ein zylindrisches, aus Keramikwerkstoff gebildetes Gehäuseteil (1) mit einer am Gehäuseteil (1) angeordneten, aus Keramikwerkstoff bestehenden Lagerstelle (4),
(b) ein an einem Ende des Gehäuseteiles (1) durch die Lagerstelle (4) gehaltenes, aus Keramikwerkstoff bestehendes Kugelelement (3),
(c) ein von dem Kugelelement (3) abragender Taststift (13), wobei der Taststift (13) in mindestens einer Ebene relativ zu dem Gehäuseteil (1) bewegbar ist,
(d) ein aus Keramikwerkstoff bestehendes Uebertragungselement (2) in Längsrichtung relativ zu dem Gehäuseteil (1) durch das Kugelelement (3) bewegbar, wobei der Gehäuseteil (1) zylindrisch mit einer inneren zylindrischen Gleitfläche (1a) und einem Träger (6) für einen Messwertumwandler ausgebildet ist, und wobei das Uebertragungselement (2) eine äussere zylindrische Gleitfläche (2a) aufweist, die in engtoleriertem Eingriff mit der inneren zylindrischen Gleitfläche (1a) mit dem Gehäuseteil (1) steht,
(e) Mittel zur Verhinderung einer Drehbewegung des Kugelelementes (3) relativ zum Gehäuseteil (1), wobei die Mittel zur Verhinderung der Drehbewegung einen Stift (7) an dem Kugelelement (3) und eine mit dem Stift (7) in Eingriff bringbare Längsnut (5) in Längsrichtung im Gehäuseteil (1) verlaufend und eine an dem Stift (7) angeordnete, in der Längsnut (5) laufende Kugel (9) umfassen.

2. Tastmessgerät nach Anspruch 1, dadurch gekennzeichnet, dass die Rauheitsklasse der Gleitflächen (1a, 2a) von Gehäuse (1) und/oder Uebertragungselement (2) etwa gleich oder kleiner ist als N 6 oder das ihr Mittelrauwert Rₐ gleich oder kleiner als 0,8 µm bzw. 32 µin und vorzugsweise gleich N 4 oder 0,2 µm bwz. 8 µin Rₐ ist.

3. Tastmessgerät nach Anspruch 1 oder 2, dadurch gekennzeichnet, dass wenigstens die Gleitfläche (1a, 2a) des Gehäuses (1) und/oder des Uebertragungselementes (2) und/oder der Träger (6) für den Messwertumwandler (14) aus dem gleichen Keramikwerkstoff oder wenigstens aus einem Keramikwerkstoff mit einem Wärmeausdehnungskoeffizienten bestehen, der nicht mehr als 10 % vom Wärmeausdehnungskoeffizienten des oder der anderen der genannten Bauteile abweicht.

4. Tastmessgerät nach einem der vorangegangenen Ansprüche bis 3, dadurch gekennzeichnet, dass das Spiel zwischen der Gleitfläche (1a) des Gehäuseteils (1) und der Gleitfläche (2a) des Uebertragungselementes (2) kleiner ist als 2 µm.

5. Tastmessgerät nach Anspruch 1, dadurch gekennzeichnet, dass die Kugel (9) ein Präzisions-Keramik-Bauteil mit einer Rauheitsklasse von < N 0, einer Rundheit < 0,13 µm und einer Durchmesserpräzision von ± 0,25 µm ist.

6. Tastmessgerät nach Anspruch 5, dadurch gekennzeichnet, dass das Spiel zwischen der Kugel (9) des Führungsstifts (7) und der Nut (5) < 0,5 µm ist.

7. Tastmessgerät nach einem der vorangehenden Ansprüche 1-6, dadurch gekennzeichnet, dass eine Verdrehsicherung für das Uebertragungselement (2) vorgesehen ist.

8. Tastmessgerät nach Anspruch 7, dadurch gekennzeichnet, dass die Verdrehsicherung einen mit dem Uebertragungselement verbundenen Stift (12) aufweist, der mit einer in der Gleitfläche (1a) des Gehäuseteils (1) vorgesehenen Nut (15) in Wirkeingriff steht.

9. Tastmessgerät nach einem der vorangegangenen Ansprüche 1 bis 8, dadurch gekennzeichnet, dass der Träger (6) und/oder das Gehäuseteil (1) und/oder die Lagerstelle (4) durch Epoxy-Kleberverbindungen miteinander verbunden sind, wobei die Klebeflächen einen Rauheitswert Rₐ von < 0,8 µm, vorzugsweise von < 0,3 µm aufweisen.

## Claims

1. A contact sensing probe comprising
(a) a cylindrical housing (1) of ceramic material and a bearing (4) of ceramic material attached to the housing (1),
(b) a hemispherical element (3) of ceramic material retained at one end of the housing (1) by said bearing (4),
(c) a stylos (13) extending from the hemispherical element (3), said stylos being movable in at least one plane relative to the housing (1),
(d) a transmission element (2) of ceramic material longitudinally movable relative to the housing (1) by said hemispherical element (3), whereby said cylindrical housing (1) is provided with an inner cylindrical sliding surface (1a) and a support (6) for a displacement transducer (14), said transmission element (2) having an outer cylindrical sliding surface (2a) in intimate sliding contact with the cylindrical sliding surface (2a) of the housing (1),
(e) means for preventing rotation of the hemispherical element (3) relative to the housing component (1) wherein said rotation preventing means comprises a guide pin (7) on on the hemispherical element (3) and said housing (1) has a longitudinal groove (5) extending in longitudinal direction adapted to receive said guide pin (7), wherein said guide pin (7) comprises a ball (9) received in said longitudinal groove (5).

2. Sensing probe according to claim 1 characterized thereby that the roughness grades of the sliding surfaces (1a,2a) of housing (1) and/or transmission element (2) is approximately equal or smaller than N 6 or that their roughness value Rₐ is equal or smaller than 0,8 µm, 32 uin respectively and preferably N 4 or 0,2 µm or 0,8 µin Rₐ respectively.

3. Sensing probe according to claim 1 or 2 charaterized thereby that at least the sliding surface (1a,2a) of housing (1) and/or the transmission element (2) and/or the support (6) for the transmission transducer (14) are of the same ceramic material or at least of a ceramic material with a coefficient of thermal expansion which does not deviate more than 10% of the coefficients of thermal expansion of one or all other mentioned construction elements.

4. Sensing probe according to one of the preceeding claims 1 to 3 characterized thereby that the clearance between the sliding surface (1a) of the housing (1) and the sliding surface (2a) of the transmission element (2) is smaller than 2 µm.

5. Sensing probe according to claim 1 characterized thereby that the ball (9) is a precision ceramic component having a roughness grade of less than N 0, a roundness less than 0.13 µm and a diametric precision of ± 0,25 µm.

6. Sensing probe according to claim 5 characterized thereby that the clearance between the ball (9) of the guide pin (7) and the groove (5) is less than 0,5 µm.

7. Sensing probe according to one of the preceding claims 1 to 6 characterized thereby that there are provided means for preventing rotation for the transmission element (2).

8. Sensing probe according to claim 7 characterized thereby that the means for preventing rotation comprises a pin (12) connected to the transmission element (2), which pin is cooperative with a groove (15) provided in the sliding surface of housing (1).

9. Sensing probe according to one of the preceeding claims 1 to 8 characterized thereby that the support (6) and/or the housing (1) and/or the bearing (4) are connected to each other by means of epoxy-glue-connections, whereby the glue surfaces have roughness values Rₐ of less than 0,8 µm preferably of less than 0,3 µm.

## Revendications

1. Appareil de mesure du taux d'impulsions comprenant
(a) une partie de boîtier (1) cylindrique réalisée dans une matière céramique avec un point d'appui (4) composé d'une matière céramique disposé sur la partie de boîtier (1),
(b) un élément sphérique (3) composé d'une matière céramique maintenu sur une extrémité de la partie de boîtier (1) par le point d'appui (4),
(c) un palpeur (13) faisant saillie à partir de l'élément sphérique (3), le palpeur (13) étant mobile sur au moins un plan par rapport à la partie de boîtier (1),
(d) un organe de transmission (2) composé d'une matière céramique mobile dans le sens de la longueur par rapport à la partie de boîtier (1) par l'intermédiaire de l'élément sphérique (3), la partie de boîtier (1) étant de forme cylindrique avec une surface de glissement intérieure cylindrique (1a) et un support (6) pour un convertisseur de signaux, et l'organe de transmission (2) présentant une surface de glissement extérieure cylindrique (2a) qui est en contact de grande précision par la surface de glissement intérieure cylindrique (1a) avec la partie de boîtier (1).
(e) des moyens pour empêcher une rotation de l'élément sphérique (3) par rapport à la partie de boîtier (1), les moyens pour empêcher la rotation comprenant une goupille (7) sur l'élément sphérique (3) et une rainure longitudinale (5) s'étendant dans le sens longitudinal de la partie de boîtier (1) et qui peut être mise en contact avec la goupille (7) et une bille (9) disposée sur la goupille (7) et qui se déplace dans la rainure longitudinale (5).

2. Appareil de mesure du taux d'impulsions selon la revendication 1, caractérisé en ce que la classe de rugosité des surfaces de glissement (1a, 2a) du boîtier (1) et/ou de l'organe de transmission (2) est environ égale ou inférieure à N 6 ou que sa valeur moyenne Ra est égale ou inférieure et à 0,8 µm ou 32 µin et de préférence égale à N 4 ou 0,2 µm ou 8 µin Ra.

3. Appareil de mesure du taux d'impulsions selon l'une quelconque des revendications 1 ou 2, caractérisé en ce qu'au moins les surfaces de glissement (1a, 2a) du boîtier (1) et/ou de l'organe de transmission (2) et/ou du support (6) pour le convertisseur de signaux (14) est composée de la même matière céramique ou au moins d'une matière céramique avec un coefficient de dilatation thermique qui ne varie pas de plus de 10% par rapport aux coefficients de dilatation thermique de l'autre ou des autres éléments de construction mentionnés.

4. Appareil de mesure du taux d'impulsions selon l'une quelconque des revendications précédentes 1 à 3, caractérisé en ce que le jeu entre la surface de glissement (1a) de la partie de boîtier (1) et la surface de glissement (2a) de l'organe de transmission (2) est inférieur à 2 µm.

5. Appareil de mesure du taux d'impulsions selon la revendication 1, caractérisé en ce que la bille (9) est un élément de construction céramique de précision avec une classe de rugosité inférieure à N 0, une rotondité inférieure à 0,13 µm et une précision de diamètre de ± 0,25 µm.

6. Appareil de mesure du taux d'impulsions selon la revendication 5, caractérisé en ce que le jeu entre la bille (9) de la goupille de positionnement (7) et la rainure (5) est inférieur à 0,5 µm.

7. Appareil de mesure du taux d'impulsions selon l'une quelconque des revendications précédentes 1 à 6, caractérisé en ce qu'une protection contre la torsion est prévue pour l'organe de transmission (2).

8. Appareil de mesure du taux d'impulsions selon la revendication 7, caractérisé en ce que la protection contre la torsion présente une goupille (12) reliée avec l'organe de transmission et qui est en liaison active avec la rainure (15) prévue dans la surface de glissement (1a) de la partie de boîtier (1).

9. Appareil de mesure du taux d'impulsions selon l'une quelconque des revendications précédentes 1 à 8, caractérisé en ce que le support (6) et/ou la partie de boîtier (1) et/ou le point d'appui (4) sont reliés ensemble par une colle époxy, les surfaces collantes présentant une valeur de rugosité Ra inférieure à 0,8 µm, de préférence inférieure à 0,3 µm.
